# EUROPÄISCHE PATENTSCHRIFT

(11) **EP 0 952 018 B1**
(45) Veröffentlichungstag und Bekanntmachung des Hinweises auf die Patenterteilung: **11.05.2005**
(21) Anmeldenummer: 99105702.7
(22) Anmeldetag: 20.03.1999
(51) Int. Cl.: B60J 1/20, B62D 35/00

(54) **Fahrzeug mit einer Vorrichtung zum Verhindern eines Kontaktes von Schmutzwasser mit einem Seitenfenster des Fahrzeuges**
Vehicle with a device for preventing contact of dirty water with the side window of the vehicle
Véhicule avec un dispositif pour éviter le contact d'eau sale avec la vitre latérale du véhicule

(30) Priorität: 24.04.1998 DE 19818388
(43) Veröffentlichungstag der Anmeldung: 27.10.1999
(73) Patentinhaber: DaimlerChrysler AG, 70567 Stuttgart (DE)
(72) Erfinder: Kohlbecker, Bernd, 76437 Rastatt (DE); Schmitt, Klaus, 71069 Sindelfingen (DE)

(56) Entgegenhaltungen:
- EP-A- 0 110 232
- EP-B- 0 411 864
- DE-A- 2 649 953
- DE-A- 3 520 971
- DE-A- 19 607 886
- DE-U- 6 902 983
- DE-U- 7 737 928
- US-A- 4 674 788

## Beschreibung

Die Erfindung betrifft ein Fahrzeug mit einer Vorrichtung zum Verhindern eines Kontaktes von Schmutzwasser mit einem Seitenfenster des Fahrzeuges, insbesondere eines Lastkraftwagens.

Bei Schlechtwetterfahrten, wie z.B. bei Regen-, Schnee- oder Nebelwetter, kommt es beim Fahrzeug regelmäßig zu einer Ansammlung von Wasser auf dessen Frontscheibe. Außerdem kommen auch die Seitenscheiben des Fahrzeuges mit dem Wasser in Kontakt, insbesondere wird die sich auf der Frontscheibe ansammelnde Flüssigkeit durch den Fahrtwind seitlich abgedrängt, wobei die Flüssigkeit einen Übergangsbereich zwischen der Frontscheibe und der jeweiligen Seitenscheibe umfließt und mit der jeweiligen Seitenscheibe in Kontakt kommt. Dieser Effekt wird durch die Aktivierung von Wischblättern verstärkt, die das auf die Frontscheibe auftreffende und sich darauf ansammelnde Wasser nach den Seiten des Fahrzeuges verdrängen oder abwischen. Das auf die Scheiben auftreffende Wasser enthält üblicherweise Verschmutzungen und führt relativ rasch zu einer erheblichen Verschmutzung und Sichtbeeinträchtigung durch die betroffenen Scheiben. Während die Frontscheibe in der Regel durch die Scheibenwaschanlage ausreichend klar und sauber gehalten werden kann, wird für die Freihaltung der Seitenscheiben von derartigen Verschmutzungen die Verwendung einer Vorrichtung der eingangs genannten Art vorgeschlagen. In der selben Weise, wie die Seitenscheiben verschmutzen, kann auch eine Verschmutzung von in diesem Bereich angeordneten Rückspiegeln erfolgen.

Aus der DE-GM 69 029 83 ist eine Vorrichtung bekannt, die an einem Straßenomnibus mit relativ kantigem Fahrzeugaufbau angebracht ist. Die bekannte Vorrichtung besteht aus einem gewölbten Profil in Form etwa eines Zylinderabschnittes, das vor einer sich zwischen Frontscheibe und Seitenscheibe des Fahrzeuges ausgebildeten, etwa lotrechten Fahrzeugkante angeordnet ist. Das Profil befindet sich dabei etwa in Höhe der vorderen Seitenscheiben, wobei die Längsachse des Profils etwa parallel zu der Fahrzeugkante verläuft. Durch die bekannte Vorrichtung wird ein Abreißen der Strömung des Fahrtwindes infolge der Kante verhindert, so daß die genannte Fahrtwindströmung entlang der vorderen Seitenscheiben strömen kann. Diese Strömung kann bei ausreichend hoher Strömungsgeschwindigkeit Schmutzwasser, das die Fahrzeugkante erreicht, an den vorderen Seitenscheiben vorbeitransportieren. Die bekannte Vorrichtung kann jedoch nur bei ausreichend hohen Fahrzeuggeschwindigkeiten in gewünschter Weise funktionieren.

Aus der DE 196 07 886 A1 ist ein Lastkraftwagen der Frontlenkerbauart mit einer Vorrichtung bekannt, mit der das Vordringen und Anlagern von während der Fahrt von den Rädern des Fahrzeuges hochgeschleuderten Schmutzpartikeln an den exponierten Stellen der Fahrhaus-Seitenwand, wie Türgriffen, Seitenscheiben, verhindert werden soll. Die genannte Vorrichtung weist zu diesem Zweck eine Luftleitdüse auf, die an einem Übergang zwischen einer Frontwand zu einer Seitenwand des Fahrzeuges, vorzugsweise oberhalb der Fahrzeugräder angeordnet ist. Die bekannte Luftleitdüse bewirkt eine entlang der Fahrerhaus-Seitenwand strömende Luftströmung mit relativ hoher Strömungsgeschwindigkeit, die vor der jeweiligen Fahrerhaus-Seitenwand eine Art Sperrvorhang" ausbildet, der hochgeschleuderte Schmutzpartikel nicht nach oben durchdringen läßt, wodurch eine Verschmutzung der Seitenscheibe durch hochgeschleuderte Schmutzpartikel reduziert wird.

Bei einer speziellen Ausführungsform dieser bekannten Vorrichtung ist deren Luftleitdüse zweiteilig ausgebildet. Dabei ist ein erstes Düsenbauteil an der Fahrzeugwand anliegend befestigt, während ein zweites Düsenbauteil verstellbar am ersten Düsenbauteil gelagert ist, so daß sich das zweite Düsenbauteil gegenüber dem ersten Düsenbauteil bzw. gegenüber der Fahrzeugseitenwand seitlich ausstellen läßt. Die Ausstellung des zweiten Düsenbauteiles erfolgt dabei derart, daß bei konstant bleibendem Ausströmquerschnitt der Einströmquerschnitt der Düse vergrößert wird. Durch diese Maßnahme ist bei gleichbleibender Fahrzeuggeschwindigkeit die Strömungsgeschwindigkeit der aus der Düse austretenden Luft vergrößerbar.

Mit Hilfe der bekannten Vorrichtung kann zwar eine Verschmutzung der Seitenscheiben durch hochgeschleuderte Schmutzpartikel reduziert werden, jedoch kann eine Verschmutzung der Seitenscheiben durch Schmutzwasser, das von der Frontscheibe seitlich abfließt, den Übergang von der Frontscheibe auf die Seitenscheibe umströmt und auf bzw. entlang der Seitenscheibe abströmt bzw. abließt, von der bekannten Vorrichtung nicht verhindert werden.

Aus der EP 0 411 864 B1 ist eine Vorrichtung zur Verhinderung des Fließens von Wasserströpfchen auf ein Fahrzeug-Seitenfenster bekannt, bei der im Übergangsbereich zwischen einer Frontscheibe und einer Seitenscheibe des Fahrzeuges ein Formteil angeordnet ist, das einen vorderen Bereich aufweist, der auf der Frontscheibe aufliegt, und einen hinteren Bereich aufweist, der eine seitlich ausstellbare Klappe bildet. Die Klappe der bekannten Vorrichtung ist zwischen einer Schönwetterstellung, in der die Klappe an der Fahrzeugaußenseite anliegt, und einer Schlechtwetterstellung verstellbar, in der die Klappe zum Fahrzeugheck hin öffnend ausgestellt ist. In dieser ausgestellten Schlechtwetterstellung wird die Luftströmung entlang der Fahrzeugseitenwand seitlich abgelenkt, wodurch auf die Frontscheibe auftreffende Wassertröpfchen, die insbesondere durch Wischblätter seitlich verdrängt werden, von der nach außen abgelenkten Strömung mitgerissen und seitlich an den Seitenfenstern vorbeitransportiert werden. Bei der bekannten Vorrichtung ist es wichtig, daß die Klappe in ihrer Schönwetterstellung an der Fahrzeugaußenwand anliegt, um den Strömungswiderstand des Fahrzeuges nach Möglichkeit nicht zu erhöhen.

Außerdem ist aus der EP 0110232 A eine Luftleiteinrichtung für einen Kraftwagen bekannt, deren flügelartige Leitfläche im Übergangsbereich von einem hinteren Dachbereich auf eine Heckscheibe des Kraftwagens angeordnet ist. Dabei ist die Luftleiteinrichtung um eine etwa auf Höhe der Heckscheibenunterkante verlaufende horizontale Fahrzeugquerachse schwenkbar gelagert und zwischen zwei entgegengesetzten Endlagen schwenkbar, wobei die Leitfläche in ihrer abgesenkten Schönwetterstellung auf der Oberseite des Hecktürrahmens aufliegt.

Dadurch steht die abgesenkte Leitfläche gegenüber der Dachhinterkante nach oben über und erhöht im gewissen Umfang den Strömungswiderstand des Kraftwagens. In der hochgeschwenkten Schlechtwetterstellung begrenzt die Leitfläche einen Strömungskanal, durch den auf dem Dach nach hinten strömende Luft kanalisiert und zur Heckscheibe des Kraftwagens umgelenkt wird. Die Stellung ist mit einer wesentlich stärkeren Erhöhung des Strömungswiderstandes des Kraftwagens verbunden. Die vom Dach zur Heckscheibe umgelenkte Luftströmung erzeugt jedoch auf der Heckscheibe einen Luftschleier, der eine Verschmutzung der Heckscheibe durch hinter dem Fahrzeugheck von der Fahrbahn aufgewirbelte Wassertropfen mit Schmutzpartikeln verhindern soll. Der Effekt beruht dabei vorwiegend darauf, daß das von der Fahrbahn hochgeschleuderte Wasser mehr Schmutzpartikel enthält als das in der Überströmung des Kraftwagendaches vorhandene Wasser. Außerdem werden auf der Heckscheibe liegende Wassertropfen vom Luftstrahl weggeblasen, wodurch die Durchsicht durch die Heckscheibe bei Regenwetter verbessert wird

Die vorliegende Erfindung beschäftigt sich mit dem Problem, für ein Fahrzeug mit einer Vorrichtung der eingangs genannten Art eine andere Ausführungsform anzugeben, die eine verbesserte Schutzwirkung ermöglicht und insbesondere eine Verbesserung der aerodynamischen Eigenschaften eines mit der Vorrichtung ausgestatteten Fahrzeuges gewährleisten kann.

Dieses Problem wird erfindungsgemäß durch ein Fahrzeug mit einer die Merkmale des Anspruches 1 aufweisende Vorrichtung gelöst.

Die Erfindung beruht auf dem allgemeinen Gedanken, bei einem Fahrzeug im Übergangsbereich von einer Frontscheibe zu einer Seitenscheibe einen Flügel anzuordnen, der zwischen einer Schönwetterstellung und einer Schlechtwetterstellung verstellbar ist. Dieser Flügel ist dabei so ausgebildet, daß er in seiner Schönwetterstellung eine aerodynamisch günstige Umströmung des vorgenannten Übergangsbereiches unterstützt und verbessert, während er in seiner Schlechtwetterstellung die Umströmung seitlich nach außen ablenkt, wodurch von der Frontscheibe verdrängtes Schmutzwasser mitgerissen und an den Seitenscheiben vorbeitransportiert wird.

Entsprechend einer bevorzugten Ausführungsform der erfindungsgemäßen Vorrichtung kann der Flügel um eine etwa parallel zum Seitenfenster und etwa senkrecht zur Fahrzeuglängsachse verlaufende Schwenkachse am Übergangsbereich schwenkbar angeordnet sein. Durch diese Maßnahme wird die ohnehin vorhandene, seitlich nach außen wirkende Strömungsumlenkung verstärkt, um den Mitnahmeeffekt der abgelenkten Strömung für am Übergangsbereich auftretendes Wasser zu verbessern.

Bei einer Weiterbildung kann die Schwenkachse des Flügels derart angeordnet sein, daß sich beim Verstellen des Flügels von seiner Schönwetterstellung in seine Schlechtwetterstellung der Abstand vom Übergangsbereich zu einer von der Frontscheibe abgewandten Längskante des Flügels zunimmt. Mit Hilfe dieser Maßnahme wird der Mitnahmeeffekt der seitlich abgelenkten Strömung zusätzlich verstärkt.

Die Verwendung der erfindungsgemäßen Vorrichtung ist aus aerodynamischer Sicht besonders vorteilhaft, wenn sie für ein Fahrzeug verwendet wird, dessen Fahrzeugaufbau relativ kantig ausgeführt ist, beispielsweise wenn das Fahrzeug eine im wesentlichen vertikal angeordnete Frontscheibe aufweist. Bei Fahrzeugen dieser Art, beispielsweise Lastkraftwagen, Omnibussen, bewirkt der Flügel in seiner Schönwetterstellung eine Umlenkung der auf die Frontscheibe auftreffenden, von dieser quer zur Fahrtrichtung abgelenkten Luftströmung im wesentlichen in Fahrzeuglängsrichtung, wodurch am Übergangsbereich zwischen Frontscheibe und Seitenscheibe ein Strömungsabriß vermieden wird. Diese Maßnahme kann bei derartigen Fahrzeugen den Strömungswiderstand erheblich reduzieren.

Weitere wichtige Merkmale und Vorteile der erfindungsgemäßen Vorrichtung ergeben sich aus den Unteransprüche, aus den Zeichnungen und aus der nachfolgenden Beschreibung eines bevorzugten Ausführungsbeispieles anhand der Zeichnungen. Es zeigen, jeweils schematisch,
- Fig. 1: eine Seitenansicht auf einen Ausschnitt einer Fahrerkabine eines Lastkraftwagens, der mit der erfindungsgemäßen Vorrichtung ausgestattet ist,
- Fig. 2: eine Schnittansicht entsprechend der Schnittlinie II in Fig. 1 auf einen Übergangsbereich zwischen einer Frontscheibe und einer Seitenwand des Fahrzeuges, wobei die am Übergangsbereich angeordnete Vorrichtung nach der Erfindung ihre Schönwetterstellung einnimmt,
- Fig. 3: eine Schnittansicht wie Fig. 2, jedoch mit der erfindungsgemäßen Vorrichtung in ihrer Schlechtwetterstellung, und
- Fig. 4: eine Prinzipdarstellung der erfindungsgemäßen Vorrichtung in einer Schnittansicht wie in den Fig. 2 und 3, in der jedoch zusätzlich Antriebsmittel zur Verstellung der erfindungsgemäßen Vorrichtung wiedergegeben ist.

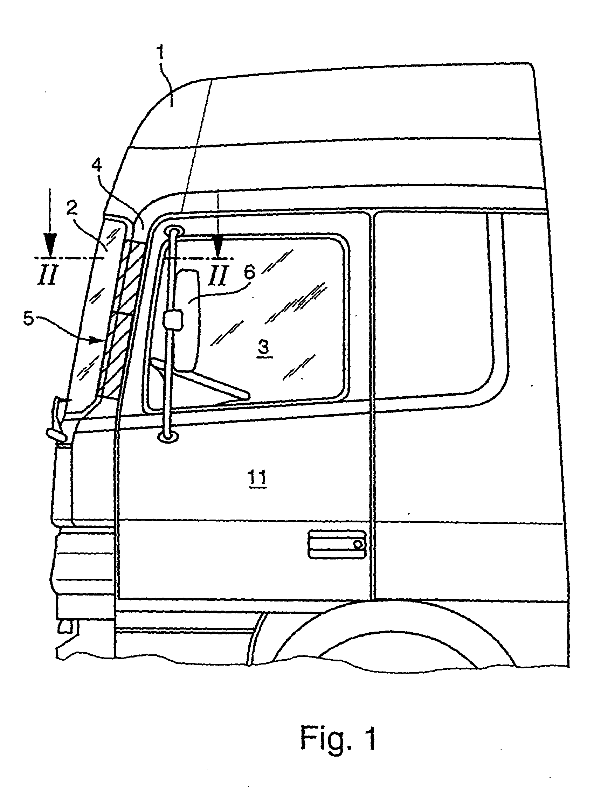

Entsprechend Fig. 1 weist eine Fahrerkabine 1 eines im übrigen nicht dargestellten Lastkraftwagens eine etwa vertikal verlaufende Frontscheibe 2 und etwa parallel zur Fahrzeuglängsrichtung verlaufende Seitenscheiben oder Seitenfenster 3 auf. Die Seitenscheibe 3 ist dabei in einer Seitentür 11 des Fahrzeuges untergebracht. Außerdem weist das Fahrzeug einen Rückspiegel 6 auf. In einem Übergangsbereich 4 zwischen der Frontscheibe 2 und einer der Seitenfenster 3 ist die erfindungsgemäße Vorrichtung 5 angeordnet. Ein derartiger Übergangsbereich 4 ist vorzugsweise ein Teil eines Türholmes, Türrahmens oder einer Fahrzeug-A-Säule oder dergleichen.

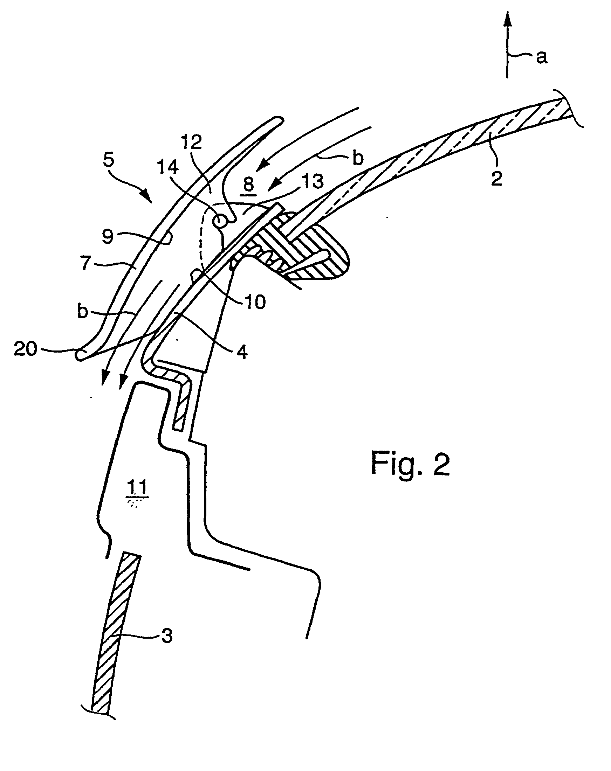

Entsprechend Fig. 2 weist die erfindungsgemäße Vorrichtung 5 einen Flügel 7 auf, der sich in der Darstellung entsprechend Fig. 2 in einer Schönwetterstellung befindet. In seiner Schönwetterstellung verläuft der Flügel 7 etwa parallel zum Übergangsbereich 4 mit einem Abstand, so daß zwischen dem Flügel 7 und dem Übergangsbereich 4 ein Strömungsweg 8 für Luft, die insbesondere während der Fahrt entlang der Frontscheibe 2 seitlich bzw. quer zu der durch den Pfeil a angedeuteten Fahrtrichtung des Fahrzeuges abgelenkt wird. Der zwischen Flügel 7 und Übergangsbereich 4 ausgebildete Strömungsweg 8 bewirkt dabei eine Strömungsumlenkung der durch den Strömungsweg 8 hindurchströmenden, durch Pfeile b symbolisierten Luftströmung in eine etwa parallel zur Fahrzeuglängsrichtung verlaufende Richtung. Durch diese Strömungsumlenkung wird die Gefahr eines Strömungsabrissen am Übergangsbereich 4 erheblich reduziert, wodurch sich die aerodynamischen Eigenschaften des Fahrzeuges hinsichtlich eines reduzierten Strömungswiderstandes verbessern.

Bei der in Fig. 2 dargestellten Ausführungsform kann der Flügel 7 an seinem stromabseitigen Endbereich als nach außen gerichteter Spoiler 20 ausgebildet sein, wodurch die strömungslenkende Wirkung des Flügels 7, insbesondere in der weiter unten beschriebenen Schlechtwetterstellung, deutlich verbessert werden kann.

Im wiedergegebenen Ausführungsbeispiel ist sowohl eine dem Übergangsbereich 4 zugewandte Innenseite 9 des Flügels 7 als auch eine dem Flügel 7 zugewandte Außenseite 10 des Übergangsbereiches 4 gewölbt ausgebildet, um die genannte Umlenkungswirkung zu verbessern. Gleichzeitig sind in der dargestellten Ausführungsform die Gestaltungen der Innenseite 9 und der Außenseite 10 derart aufeinander abgestimmt, daß sich für die durch den Strömungsweg 8 hindurchströmende Luft eine Art Düsenströmung ausbildet, die insbesondere eine erhöhte Austrittsgeschwindigkeit aufweist. Der Düseneffekt wird vorzugsweise dadurch erzielt, daß die Querschnittsfläche vom Eintrittsbereich in den Strömungsweg 8 bis zum Austrittsbereich aus dem Strömungsweg 8 abnimmt.

Die auf diese Weise umgelenkte Luftströmung kann dann etwa parallel zur Fahrzeuglängsrichtung entlang der angedeuteten Türe 11 und entlang der darin enthaltenden Seitenscheibe 3 entlangströmen.

Auf der Innenseite 9 des Flügels 7 sind im wesentlichen in Strömungsrichtung verlaufende Stege 12 angeordnet, von denen in den Fig. 2 bis 4 jedoch nur einer dargestellt ist. Jedem Steg 12 ist eine an der Außenseite 10 angebrachte Lagerung 13 zugeordnet, an welcher der Steg 12 und somit der Flügel 7 um eine etwa in Längsrichtung des Flügels 7, d.h. etwa quer zur Fahrtrichtung und etwa parallel zur Ebene der Seitenscheibe 3, verlaufenden Schwenkachse 14 schwenkbar gelagert ist. Die Schwenkachse 14 steht in den Fig. 2 bis 4 etwa senkrecht auf der Zeichnungsebene.

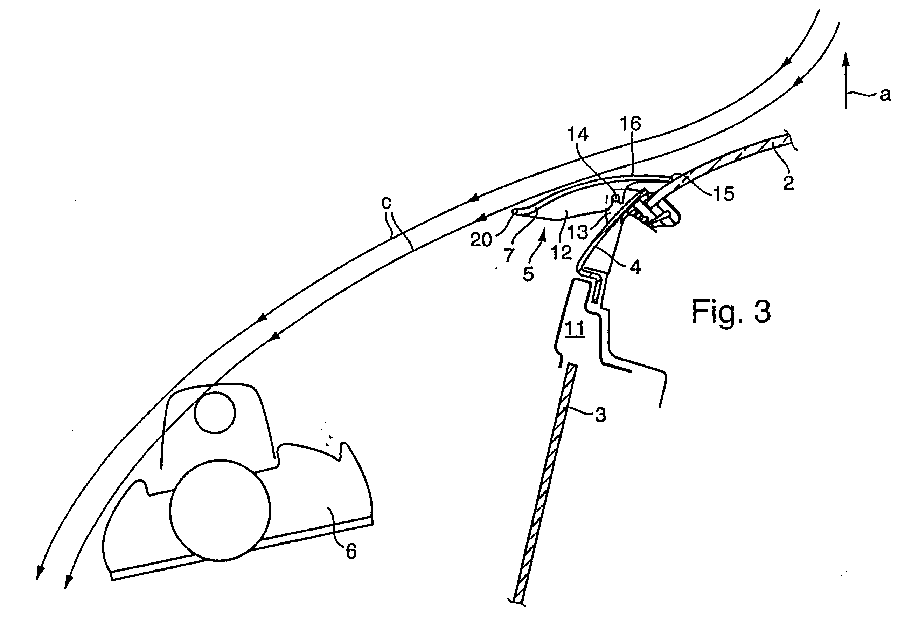

Während der Flügel 7 in seiner in Fig. 2 dargestellten Schönwetterstellung die Aerodynamik des Kraftfahrzeuges verbessert, bewirkt er in einer in Fig. 3 dargestellten Schlechtwetterstellung eine verstärkte Ablenkung der von der Frontscheibe 2 herkommenden Luft seitlich nach außen. In seiner Schlechtwetterstellung kommt dabei eine der Frontscheibe 2 zugewandte Längskante 15 des Flügels 7 auf der Frontscheibe 2 zur Anlage, so daß entlang der Frontscheibe 2 seitlich abfließende Flüssigkeit, wie z.B. Regenwasser, Scheibenreinigungsflüssigkeit, von der Frontscheibe 2 auf eine Außenseite 16 des Flügels 7 fließt. Zur Verbesserung der Abströmung der Flüssigkeit von der Frontscheibe 2 auf die Außenseite 16 des Flügels 7, kann die Längskante 15 als Dichtlippe ausgebildet oder mit einer solchen ausgestattet sein. Die entsprechend den Pfeilen c seitlich nach außen abgelenkte Luftströmung kann dann die sich auf der Außenseite 16 auftretende Flüssigkeit erfassen und mitreißen, wodurch das Schmutzwasser an der Seitenscheibe 3 vorbeitransportiert wird.

Bei der in Fig. 3 dargestellten Ausführungsform ist die Vorrichtung 5 nach der Erfindung zusätzlich so ausgelegt, daß die das Schmutzwasser abtransportierende Strömung auch an dem Seitenspiegel 6 außen vorbeigeleitet wird, wodurch auch eine Verschmutzung des Rückspiegels 6 wirksam verhindert werden kann. Sowohl die Seitenscheibe 3 als auch der Rückspiegel 6 können somit von Verschmutzungen durch Regenwasser od.dgl. wirksam freigehalten werden.

Auch in der Ausführungsform gemäß Fig. 3 ist der Flügel 7 mit einem Spoiler 20 ausgestattet, der in dieser Stellung die Seitenablenkung der schmutzbehafteten Strömung verbessert.

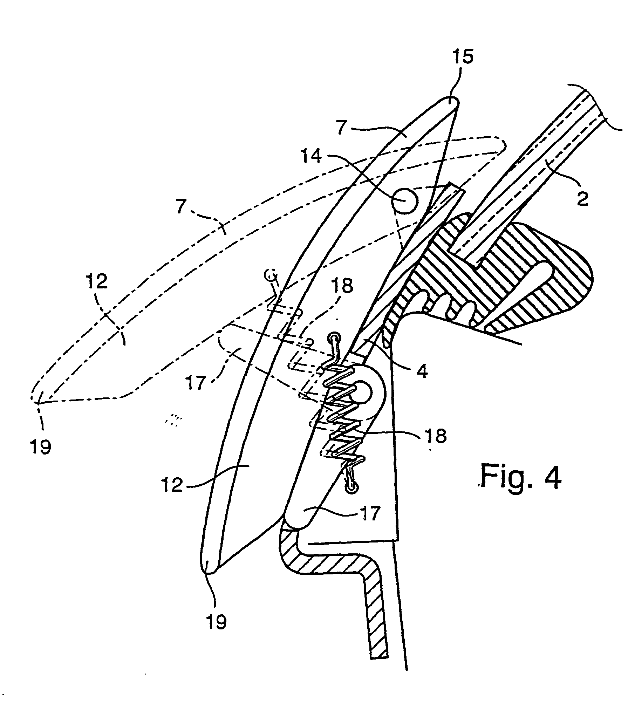

Entsprechend Fig. 4 wird die Verstellung des Flügels 7 zwischen seiner mit durchgezogenen Linien dargestellten Schönwetterstellung und seiner mit unterbrochenen Linien dargestellten Schlechtwerterstellung mit Hilfe eines verschwenkbaren Nockens 17 durchgeführt. Der Nocken 17 ist dabei in dem Übergangsbereich 4 untergebracht und kann über einen nicht näher dargestellten Stellantrieb betätigt werden. Zur Erzeugung einer Rückstellkraft kann beispielsweise eine Schraubenzugfeder 18 vorgesehen sein, die zwischen dem Flügel 7 bzw. dessen Steg 12 und dem Übergangsbereich 4 gespannt ist.

Anstelle der in Fig. 4 dargestellten Nockenverstellung können bei einer anderen Ausführungsform auch Luftbälge oder kleine Druckzylinder als Antriebsmittel vorgesehen sein, die pneumatisch oder hydraulisch beaufschlagbar sind.

Bei der Variante entsprechend Fig. 4 ist die Schwenkachse 14 relativ nahe an der vorderen, der Frontscheibe 2 zugewandten Längskante 15 angeordnet, wodurch sich bei der Verstellung von der Schönwetterstellung in die Schlechtwetterstellung der Abstand einer hinteren, von der Frontscheibe 2 abgewandten Längskante 19 des Flügels 7 zur gegenüberliegenden Seitenwand des Fahrzeuges bzw. zum Übergangsbereich 4 sehr stark vergrößert. Durch diese Maßnahme wird eine besonders starke Ablenkung der anströmenden Luft erzielt. Die Ausführungsform gemäß Fig. 4 ist ohne Spoiler ausgebildet.

## Patentansprüche

1. Fahrzeug mit einer Vorrichtung zum Verhindern eines Kontaktes von Schmutzwasser mit einem Seitenfenster des Fahrzeuges umfassend einen Flügel (7), der in einem Übergangsbereich (4) zwischen einer Frontscheibe (2) und der Seitenscheibe (3) des Fahrzeuges angeordnet ist und der zwischen einer Schönwetterstellung, in der er etwa parallel zum Übergangsbereich (4), mit Abstand dazu verläuft und einen Strömungsweg (8) für von der Frontscheibe (2) seitlich verdrängte Luft ausbildet, und einer Schlechtwetterstellung verstellbar ist, in der er entlang einer der Frontscheibe (2) zugewandten Längskante (15) auf der Frontscheibe (2) oder auf einem dieser zugewandten Abschnitt des Übergangsbereiches (4) zur Anlage kommt, wobei Antriebsmittel (17,18) vorgesehen sind, die mit dem Flügel (7) zu dessen Verstellung zusammenwirken.

2. Fahrzeug mit einer Vorrichtung nach Anspruch 1,
**dadurch gekennzeichnet,**
**daß** der Flügel (7) um eine etwa parallel zum Seitenfenster (3) und etwa senkrecht zur Fahrtrichtung des Fahrzeuges verlaufende Achse (14) schwenkbar am Übergangsbereich (4) angeordnet ist.

3. Fahrzeug mit einer Vorrichtung nach Anspruch 2,
**dadurch gekennzeichnet,**
**daß** die Schwenkachse (14) derart am Flügel (7) angeordnet ist, daß sich beim Verstellen von der Schönwetterstellung in die Schlechtwetterstellung der Abstand vom Übergangsbereich (4) zu einer von der Frontscheibe (2) abgewandten Längskante (19) des Flügels (7) vergrößert.

4. Fahrzeug mit einer Vorrichtung nach einem der vorhergehenden Ansprüche,
**dadurch gekennzeichnet,**
**daß** die vom Fahrzeug abgewandte Außenseite (16) des Flügels (7) als Strömungsleitprofil ausgebildet ist, das in der Schlechtwetterstellung des Flügels (7) dessen Ablenkwirkung für von der Frontscheibe (2) seitlich abgedrängte Luft nach außen, seitlich am Seitenfenster (3) oder am Seitenfenster (3) und an einem Seitenspiegel (6) vorbei unterstützt.

5. Fahrzeug mit einer Vorrichtung nach einem der vorhergehenden Ansprüche,
**dadurch gekennzeichnet,**
**daß** die dem Fahrzeug zugewandte Innenseite (9) des Flügels (7) als Strömungsleitprofil ausgebildet ist, das in der Schönwetterstellung von der Frontscheibe (2) seitlich abgedrängte Luft im wesentlichen ohne Strömungsabriß etwa in Fahrtrichtung des Fahrzeuges umlenkt.

6. Fahrzeug mit einer Vorrichtung nach Anspruch 5,
**dadurch gekennzeichnet,**
**daß** die dem Flügel (7) zugewandte Außenseite (10) des Übergangsbereiches (4) als Strömungsleitprofil ausgebildet ist, das in der Schönwetterstellung die durch den Flügel (7) bewirkte Umlenkung der von der Frontscheibe (2) verdrängten Luft begünstigt.

7. Fahrzeug mit einer Vorrichtung nach einem der vorhergehenden Ansprüche,
**dadurch gekennzeichnet,**
**daß** der Strömungsquerschnitt des zwischen Flügel (7) und Übergangsbereich (4) ausgebildeten Strömungsweges (8) in Strömungsrichtung abnimmt.

8. Fahrzeug mit einer Vorrichtung nach einem der vorhergehenden Ansprüche,
**dadurch gekennzeichnet,**
**daß** der Flügel (7) sich über die ganze Höhe der Seitenscheibe (3) erstreckt.

9. Fahrzeug mit einer Vorrichtung nach einem der vorhergehenden Ansprüche,
**dadurch gekennzeichnet,**
**daß** der Flügel (7) in einem stromabseitigen Bereich mit einem Spoiler (20) ausgestattet ist.

10. Fahrzeug mit einer Vorrichtung nach einem der vorhergehenden Ansprüche,
**dadurch gekennzeichnet,**
**daß** die Antriebsmittel (17, 18) zum Verstellen des Flügels (7) im Übergangsbereich (4) angeordnet sind.

11. Fahrzeug mit einer Vorrichtung nach einem der vorhergehenden Ansprüche,
**dadurch gekennzeichnet,**
**daß** die Antriebsmittel Federmittel (18) aufweisen, die den Flügel (7) in dessen Schönwetterstellung vorspannen.

12. Fahrzeug mit einer Vorrichtung nach einem der vorhergehenden Ansprüche,
**dadurch gekennzeichnet,**
**daß** der Flügel (7) derart ausgebildet ist, daß er in seiner Schlechtwetterstellung auch einen im Bereich der Seitenscheibe (3) angeordneten Seitenspiegel (6) vor Verunreinigungen durch Schmutzwasser freihält.

13. Fahrzeug mit einer Vorrichtung nach Anspruch 1,
**dadurch gekennzeichnet,**
**daß** das Fahrzeug ein Lastkraftwagen der Frontlenkerbauart ist.

## Claims

1. A vehicle with a device for preventing dirty water from coming into contact with a side window of the vehicle comprising a fin (7) which is positioned in a transitional area (4) between a windscreen (2) and the side window (3) of the vehicle and which can be adjusted between a good weather position, in which it runs approximately parallel to the transitional area (4) and at a distance therefrom and forms a flow path (8) for air displaced laterally by the windscreen (2), and a bad weather position in which its longitudinal edge (15) facing the windscreen (2) rests on the windscreen (2) or on a section of the transitional area (4) facing said windscreen (2), driving means (17, 18) which co-operate with the fin (7) in order to adjust it also being provided.

2. A vehicle with a device in accordance with claim 1,
**characterised in that**
the fin (7) is positioned in the transitional area (4) in such a manner that it is able to pivot about an axis (14) which runs approximately parallel to the side window (3) and approximately perpendicular to the direction of travel of the vehicle.

3. A vehicle with a device in accordance with claim 2,
**characterised in that**
the axis of pivoting (14) is positioned on the fin (7) in such a manner that during adjustment from the good weather position to the bad weather position the distance from the transitional area (4) to a longitudinal edge (19) of the fin (7) facing away from the windscreen (2) is increased.

4. A vehicle with a device in accordance with one of the preceding claims,
**characterised in that**
the outside (16) of the fin (7) facing away from the vehicle is designed as a flow guidance section which, when the fin (7) is in the bad weather position, supports the deflection action of said fin (7) for air displaced sideways by the windscreen (2) outwards, laterally past the side window (3) or past the side window (2) and a side mirror (6).

5. A vehicle with a device in accordance with one of the preceding claims,
**characterised in that**
the inside (9) of the fin (7) facing towards the vehicle is designed as a flow guidance section which, in the good weather position, diverts air displaced sideways by the windscreen (2) approximately in the direction of travel of the vehicle essentially without stalling.

6. A vehicle with a device in accordance with claim 5,
**characterised in that**
the outside (10) of the transitional area (4) facing towards the fin (7) is designed as a flow guidance section which, in the bad weather position, favours the diversion of air displaced by the windscreen (2) effected by the fin (7).

7. A vehicle with a device in accordance with one of the preceding claims,
**characterised in that**
the flow cross-section of the flow path (8) formed between the fin (7) and the transitional area (4) decreases in the direction of flow.

8. A vehicle with a device in accordance with one of the preceding claims,
**characterised in that**
the fin (7) extends over the entire height of the side window (3).

9. A vehicle with a device in accordance with one of the preceding claims,
**characterised in that**
the fin (7) is fitted with a spoiler (20) in a downstream area.

10. A vehicle with a device in accordance with one of the preceding claims,
**characterised in that**
the driving means (17, 18) for adjusting the fin (7) are positioned in the transitional area (4).

11. A vehicle with a device in accordance with one of the preceding claims,
**characterised in that**
the driving means have spring means (18) which preload the fin (7) in its good weather position.

12. A vehicle with a device in accordance with one of the preceding claims,
**characterised in that**
the fin (7) is designed in such a manner that in its bad weather position it also prevents a side mirror (6) positioned in the area of the side window (3) from being contaminated with dirty water.

13. A vehicle with a device in accordance with claim 1,
**characterised in that**
the vehicle is a heavy goods vehicle of "cab-over-engine" design.

## Revendications

1. Véhicule automobile muni d'un dispositif destiné à empêcher les projections d'eau sale sur une fenêtre latérale du véhicule, comportant une ailette (7), qui est agencée dans une zone de transition (4) entre un pare-brise (2) et la fenêtre latérale (3) du véhicule et qui est réglable entre une position de beau temps, dans laquelle elle est orientée à peu près parallèlement à la zone de transition (4) à distance de celle-ci et forme un canal d'écoulement (8) pour l'air repoussé latéralement par le pare-brise (2), et une position d'intempéries, dans laquelle elle est en appui sur le pare-brise (2), le long d'un bord longitudinal (15) orienté vers le pare-brise (2), ou sur une partie, orientée vers ce dernier, de la zone de transition (4), sachant qu'il est prévu des moyens d'entraînement (17, 18) qui coopèrent avec l'ailette (7) pour le réglage de celle-ci.

2. Véhicule automobile muni d'un dispositif selon la revendication 1, **caractérisé en ce que** l'ailette (7) est montée dans la zone de transition (4) de manière pivotante autour d'un axe (14) à peu près parallèle à la fenêtre latérale (3) et à peu près perpendiculaire au sens de déplacement du véhicule.

3. Véhicule automobile muni d'un dispositif selon la revendication 2, **caractérisé en ce que** l'axe de pivotement (14) est agencé contre l'ailette (7) de telle sorte que, lors du réglage de la position de beau temps dans la position d'intempéries, la distance entre la zone de transition (4) et un bord longitudinal (19) de l'ailette (7), opposé au pare-brise (2), s'agrandit.

4. Véhicule automobile muni d'un dispositif selon l'une quelconque des revendications précédentes, **caractérisé en ce que** le côté extérieur (16) de l'ailette (7), détourné du véhicule, est conçu sous forme de profil de guidage d'air qui, dans la position d'intempéries de l'ailette (7), favorise l'action de celle-ci, par laquelle l'air repoussé latéralement par le pare-brise (2) est dévié vers l'extérieur, le long des côtés de la fenêtre latérale (3) ou de la fenêtre latérale (3) et d'un rétroviseur extérieur (6).

5. Véhicule automobile muni d'un dispositif selon l'une quelconque des revendications précédentes, **caractérisé en ce que** le côté intérieur (9) de l'ailette (7), orienté vers le véhicule, est conçu sous forme de profil de guidage d'air qui, dans la position de beau temps, dévie pratiquement dans le sens de déplacement du véhicule, sensiblement sans décollement des filets d'air, l'air repoussé latéralement par le pare-brise (2).

6. Véhicule automobile muni d'un dispositif selon la revendication 5, **caractérisé en ce que** le côté extérieur (10) de la zone de transition (4), orienté vers l'ailette (7), est conçu sous forme de profil de guidage d'air qui, dans la position de beau temps, favorise la déviation, provoquée par l'ailette (7), de l'air repoussé par le pare-brise (2).

7. Véhicule automobile muni d'un dispositif selon l'une quelconque des revendications précédentes, **caractérisé en ce que** la section d'écoulement du canal d'écoulement (8), réalisé entre l'ailette (7) et la zone de transition (4), diminue dans le sens d'écoulement.

8. Véhicule automobile muni d'un dispositif selon l'une quelconque des revendications précédentes, **caractérisé en ce que** l'ailette (7) s'étend sur toute la hauteur de la fenêtre latérale (3).

9. Véhicule automobile muni d'un dispositif selon l'une quelconque des revendications précédentes, **caractérisé en ce que** l'ailette (7) est munie d'un spoiler (20) dans la zone du côté aval.

10. Véhicule automobile muni d'un dispositif selon l'une quelconque des revendications précédentes, **caractérisé en ce que** les moyens d'entraînement (17, 18) destinés au réglage de l'ailette (7) sont agencés dans la zone de transition (4).

11. Véhicule automobile muni d'un dispositif selon l'une quelconque des revendications précédentes, **caractérisé en ce que** les moyens d'entraînement comportent des moyens à ressort (18) par lesquels l'ailette (7) est précontrainte dans sa position de beau temps.

12. Véhicule automobile muni d'un dispositif selon l'une quelconque des revendications précédentes, **caractérisé en ce que** l'ailette (7) est conçue de telle sorte que, dans sa position d'intempéries, elle protège également contre les projections d'eau sale un rétroviseur extérieur (6) agencé dans la zone de la fenêtre latérale (3).

13. Véhicule automobile muni d'un dispositif selon la revendication 1, **caractérisé en ce que** le véhicule automobile est un véhicule poids lourd du type camion à cabine avancée.
